# EUROPEAN PATENT SPECIFICATION

(11) **EP 2 480 117 B1**
(45) Date of publication and mention of the grant of the patent: **11.06.2014**
(21) Application number: 10754719.2
(22) Date of filing: 09.09.2010
(51) Int. Cl.: A47J 31/40

(54) **Container holding assembly and receiving assembly adapted for connecting a container to a machine**
Behälterhalter und Aufnahmevorrichtung zum Anschluss eines Behälters an eine Maschine
Ensemble supportant un récipient et ensemble de réception adapté à la connexion d'un récipient sur une machine

(30) Priority: 23.09.2009 EP 09171130
(43) Date of publication of application: 01.08.2012
(73) Proprietor: Nestec S.A., 1800 Vevey (CH)
(72) Inventor: BAUDET, Larry Sacha, CH-1028 Préverenges (CH); SCORRANO, Lucio, CH-1400 Yverdon-les-Bains (CH)
(74) Representative: Ducreux, Marie
(86) International application number: PCT/EP2010/063233
(87) International publication number: WO 2011/036063

(56) References cited:
- EP-A1- 0 343 090
- EP-A1- 2 123 201
- WO-A1-2009/000810
- DE-U1-202007 008 815
- DE-U1-202007 008 815
- FR-A1- 2 489 266
- US-A- 4 059 181

## Description

The present invention relates to a method for securing a disposable powder tank to a machine processing doses of powder distributed from the tank.

WO 2009/000810 describes a container for storing and unloading a powder material that comprises :
- a vessel presenting a closed end and an opened end,
- a hopper placed inside the vessel and tapering to a discharge outlet in direction of the vessel opened end,
- a tearable membrane closing the hopper and the vessel.

This container can be used to refill the tank of a machine, in particular a machine producing beverages by dilution of the powder stored in the container. This container can also be used as the expansion tank of a machine. Actually if the machine presents a small internal tank or no tank at all, the container can be placed in the machine and provide the function of a tank or an expansion tank above the machine.

Yet it has been noticed that the simple installation of the container in the machine is not sufficient to prevent the movement of the container during the time it is positioned in the machine ; for example, the machine operator could inadvertently push the container which could unload its powder out of the machine opening.

It has also been noticed that the operator may orientate the container along a bad direction when he connects the container to the machine. There is a need for a more direct and immediate connection of the container to the machine so that the operator immediately places the container along the correct direction.

The present invention aims at solving these problems.

Further relevant prior art is disclosed in document US 4059181 A.

According to a first aspect, the invention concerns a container holding assembly such as defined in claim 1.

Preferably the holding vessel presents a shape and a size such that at least a part of the container is slightly compressed by at least a part of the holding vessel. Consequently, once the container is placed inside the holding vessel, the assembly of the container in the holding vessel can be manipulated without the container falling or sliding out of the holding vessel. A wall friction is created between the container and the holding vessel that prevents the sliding of the container. Yet this wall friction is insufficient to resist to a simple human manual force pushing the container out of the holding vessel.

The guiding and locking means of the container holding assembly is a tongue but in a container holding assembly not being part of the invention such as claimed any other known guiding and locking means could be used like e.g. corresponding screw threads on the holding vessel opened end and on the receiving assembly.

According to an embodiment not forming part of the invention such as claimed, the releasing means of the container holding assembly can be an opening able to let a finger slide inside. The operator can slide a finger in that opening to push the container vessel out of the holding vessel.

According to another embodiment not forming part of the invention such as claimed, the closed end of the holding vessel can also be made at least partially of a soft material so that the operator can exert a force on the container vessel through the soft material at the closed en of the holding vessel.

According to the invention such as claimed, the closed end of the holding vessel presents a hole in which a piston is able to slide. The length of the piston must be sufficient to enable the displacement of the extremity of the container vessel opened end out of the holding vessel of the receiving assembly so that the operator can grab it and draw it out.

The holding vessel is generally made of a rigid material. It is preferably made of plastic or metal to provide an aesthetic aspect.

According to a second aspect, the invention is related to a receiving assembly configured and adapted to receive the container holding assembly such as described above comprising :
- guiding means to guide the container holding assembly,
- locking means to lock the container holding assembly,
- means for piercing the tearable membrane of the container and for cooperating with the hopper of the container.

The means for piercing the tearable membrane of the container and for cooperating with the hopper of the container is preferably a conduit presenting a section smaller than the section of the opened of the container vessel and bigger than the section of the hopper discharge outlet. The outlet section of the conduit presents generally a symmetrical form preferably a circular form. It can present a specific form cooperating exactly with the discharge outlet of the hopper. Due to these relative section differences :
- the conduit can fit into the container vessel opened end when piercing the container membrane and
- the discharge outlet of the hopper can fit into the conduit, which enables the bulk material to directly flow from the container through the hopper to the machine without contact with the air.

According to the preferred mode, the guiding means of the receiving assembly guide the container holding assembly according to an axially aligned configuration respectively to the axis of the conduit and the axis of the of the hopper discharge outlet. Then the both axis of the hopper discharge outlet and of the conduit overlap and the membrane can be regularly torn along its entire surface permitting an efficient emptying of the container.

The guiding means of the receiving assembly can be a vertical slit. Said vertical slit can match with a tongue of the container holding assembly so that the tongue slides along the slit.

The locking means of the receiving assembly can be a horizontal slit. According to the preferred embodiment of the present invention, the receiving assembly comprises a vertical slit to guide the container holding assembly and a horizontal slit to lock the container holding assembly, the horizontal slit communicating with the bottom end of the vertical slit. These two slits enable easy coupling of the container holding assembly in the receiving assembly according to a first vertical downward movement to slide the tongue in the vertical slit and a second horizontal movement to slide the tongue in the horizontal slit.

As mentioned above other guiding and locking means can be implemented like for example screw threads along the holding assembly and the receiving assembly.

According to a third aspect, the invention is related to a dispensing machine which comprises a receiving assembly such as described above and a flowable substance dosing assembly at the bottom of said receiving assembly. Actually the invention is particularly adapted to machines fed with powders. The dosing assembly of the machine receives and transports a predetermined amount of flowable substance to part of the machine that processes this substance. The dosing assembly can be a rotary auger driven by an electrically powered motor.

Preferably, the dispensing machine can produce beverages. The flowable substance is accordingly a powdered food or beverage, like coffee, milk-based powder, chocolate, soup, soluble tea, ...

According to a fourth aspect, the invention concerns a method for connecting a container for storing and unloading a powder material to a machine such as defined in claim 3.

According to a fifth aspect, the invention concerns a system for producing beverages such as defined in claim 8.

### Brief description of the drawings

The characteristics and advantages of the invention will be better understood in relation to
- Figures 1 and 2 respectively depict an exploded view and a section view of the flowable powder container used in the present invention.
- Figure 3 depicts an exploded view of the container holding assembly and the receiving assembly of the present invention.
- Figure 4 depicts side and section views the flowable powder container, the container holding assembly and the receiving assembly assembled together during the dispensing of the flowable powder.

### Detailed description of the drawings

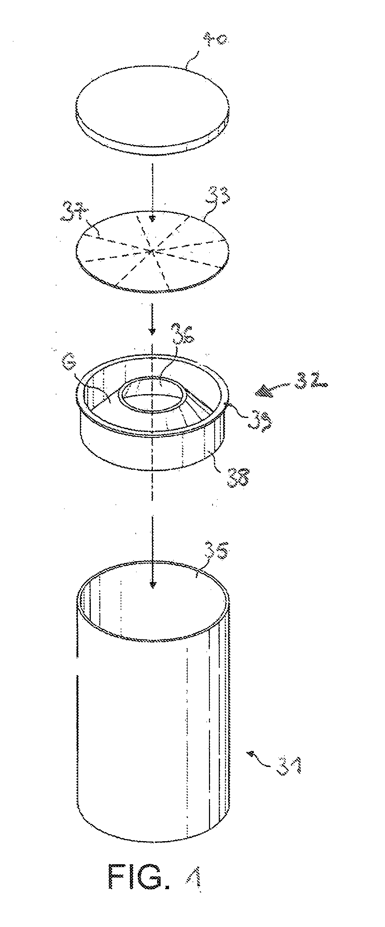

Figure 1 illustrates a container 3 used in the context of the present invention for storing a flowable powder and able to refill a machine. It comprises a vessel 31 that is here a rigid cylinder presenting a closed end 34 and an opened end 35. The container 3 comprises a hopper 32 positioned inside the vessel volume and near to the opened end 35 of the vessel 31. Said hopper extends on the whole vessel section and tapers to a discharge outlet 36 that faces the opened end 35 of the vessel. The hopper is attached to a circular skirt or outside flange 38 which presents the same form as the internal wall of the vessel 31. This skirt fits inside the vessel 31 and helps positioning the hopper in the vessel. This skirt presents a stopping edge 39 that abuts against the vessel opened end edge and avoids the hopper sliding along the vessel wall. Due to the fact that the hopper is placed inside the vessel volume with its discharge outlet facing the vessel opened end, a groove G extends between the hopper tapering wall and the vessel wall along all the periphery of the hopper discharge outlet.

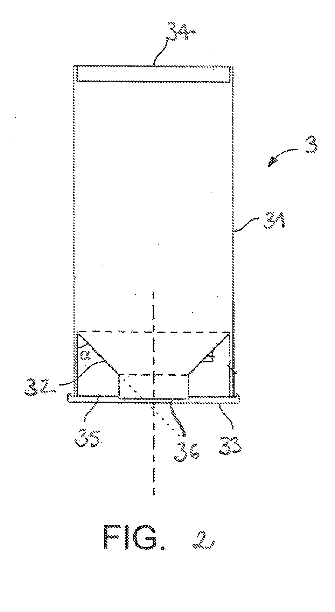

A tearable membrane 33 is fixed above the opened end 35 of the vessel 31 and above the hopper discharge outlet 36 closing simultaneously the vessel opened end and the hopper tapered end. Preferably, the membrane is tearable by exercising a contact pressure on its surface. Such a tearable function can be obtained by making small perforations 37 (see Figure 2) through the membrane. Then the membrane can present tear lines, for example straight lines intersecting at the centre of the membrane. The membrane 33 may be made of any material that is tearable, this can be at least a material chosen between : paper, aluminium and polymer sheets. Lastly a protective cap 40 can be placed above the tearable membrane 33 in order to prevent the tearing of the membrane before the container is used for unloading its content.

Figure 2 is a section view of the container 3 showing the relative position of the different components.

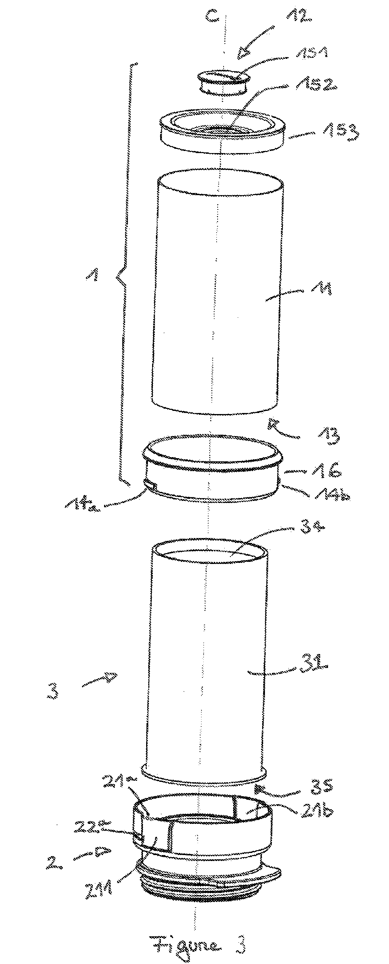

Figure 3 depicts in its upper part an exploded view of the container holding assembly 1. This assembly comprises a rigid holding vessel 11 presenting an opened end 13 and a closed end 12, said end being closed by a pierced cover 153 presenting a hole 152 that is closed by a piston 151. The combination of the pierced hole 152 and the piston 151 forms releasing means for withdrawing the container 3 from the holding vessel 11 when the container holding assembly 1 is disconnected from the receiving assembly 2. The centre part of the pierced cover 153 can be recessed inside the holding vessel volume so that the upper part of the piston 151 does not stand higher than the end of the vessel 11 when the container 3 is put in place inside the holding vessel 11.

The shape and the size of the holding vessel 11 are such that the container vessel 31 is able to totally fit inside that holding vessel. Once the container vessel 31 is slid in the holding vessel 11, no part of the container vessel 31 can be seen. The container holding assembly 1 comprises a ring 26 placed around the holding vessel 11 and near its opened end 13. This ring supports two guiding and locking means of the container holding assembly 1 which are made of two tongues 14a, 14b extending radially and outwardly from the holding vessel surface. The different parts of the container holding assembly 1 may be connected by permanent or detachable means. Permanent means may be designed to be sealing, welding, bonding, non-reversible clipping means or other means. Detachable means may mean an assembly formed of a threaded portion or equivalent complementary mechanical engagement means on one of the elements of the assembly which collaborate with a threaded portion or complementary mechanical engagement means belonging to another element of the assembly.

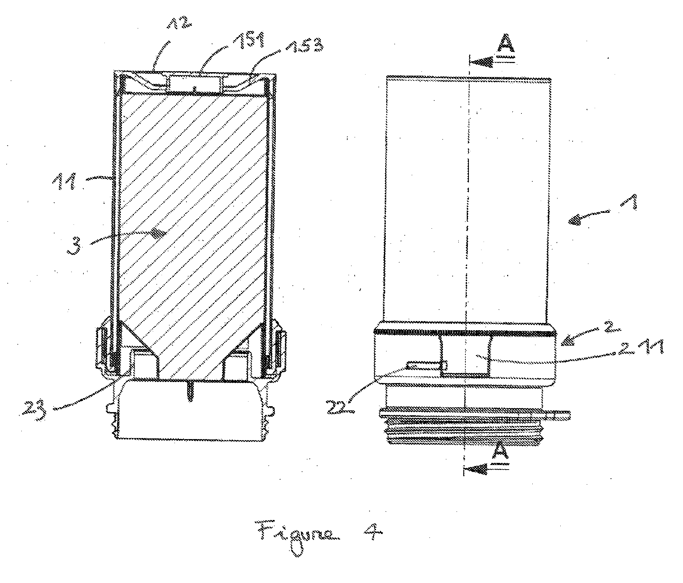

The receiving assembly 2 presents the same circular shape as the container holding assembly 1 so that it can receive said container holding assembly 1 inside. It presents two vertical slits 21a, 21 b on the periphery of its ring shape to match with the two tongues 14a, 14b of the container holding assembly 1 in order to guide it vertically. Optional external peripheral covers 211 hide these vertical slits 21 a, 21 b in the embodiment of Figures 3 and 4. Due to these corresponding guiding means 14a, 14b, 21a, 21b, the container holding assembly 1 perfectly orientates the container 11 so that it is vertically pushed against the means 23 for piercing the tearable membrane of the container and for cooperating with the hopper of the container hired in the receiving assembly 2 (see Figure 4). Due to the guiding means, the centre axis of the container 3 and of the receiving assembly 2 align themselves on the same axis C. The tearable membrane (not represented in Figures 3 and 4) of the container 3 is quickly torn and its torn pieces are well moved apart from the opened mouth of the hopper.

Further to this downward movement that opens the tearable membrane of the container 3, the operator can lock the container holding assembly 1 with the container 3 inside by horizontally rotating the container holding assembly 1 so that the both tongues 14a, 14b slide inside the horizontal slides 22a of the receiving assembly 2 which avoids the inadvertent withdrawing of the container holding assembly 1 from the receiving assembly 2. Actually, when the container 3 acts as the main or expansion tank of the machine, the whole flowable substance is not totally poured inside the machine once the container holding assembly 1 and the receiving assembly 2 are connected together. An amount of powder flows immediately in the receiving assembly 2 and for example in the dosing means at the bottom of said receiving assembly but the rest stays inside the container 3 and is gradually removed from it by the dosing means. It is important to not withdraw the container holding assembly 1 before the container 3 is totally empty. If not, the flowable substance would flow out of the container during the withdrawing and messes up the machine. Then the operator should not disconnect the two assemblies 1, 2 before he is sure that the container is empty ; this can be checked for example through little transparent superposed parts of the container 3 and the container holding assembly 1 near their opened ends area. The emptiness can also be controlled by an optical sensor or by counting the number of doses that have flowed through the dosing means. The locking means oblige the operator to ask himself if the container holding assembly 1 can be removed.

The receiving assembly 2 can present means for attaching it to a machine to be fed with the flowable substance. In Figures 3 and 4, these means are threaded screws. The means 23 for piercing the tearable membrane of the container and for cooperating with the hopper of the container 3 (see Figure 4) is a conduit of which upward section is greater than the section of the hopper discharge outlet and smaller than the opened end of the container vessel 31. The downward section of this conduit is attached to the internal periphery of the receiving assembly 2.

## Claims

1. Container holding assembly (1) configured and adapted to connect a container (3) adapted for storing and unloading a powder material to a machine,
- said container (3) comprising :
. a vessel (31) presenting a closed end (34) and an opened end (35),
. a hopper (32) placed inside the vessel (31) and tapering to a discharge outlet in direction of the vessel opened end,
. a tearable membrane (33) closing the hopper and the vessel.
- said machine comprising a receiving assembly (2) configured and adapted to receive the container holding assembly (1), said receiving assembly comprising means (23) for piercing the tearable membrane of the container and for cooperating with the hopper of the container, wherein the container holding assembly (1) comprises a holding vessel (11) presenting a closed end (12) and an opened end (13), said holding vessel :
- presenting a shape and a size such that the container vessel is able to totally fit inside that holding vessel,
- comprising at least one guiding and locking means (14) at its opened end for matching corresponding guiding means (21) and locking means (22) of the receiving assembly, wherein said guiding and locking means is a tongue (14),
- comprising releasing means (151, 152) at its closed end for withdrawing the container from the holding vessel, said releasing means comprising a hole (152) in which a piston (151) is able to slide.

2. Container holding assembly according to Claim 1, wherein the holding vessel (11) is made of plastic or metal.

3. Method for connecting a container (3) for storing and unloading a powder material to a machine,
- said container (3) comprising :
. a vessel (31) presenting a closed end (34) and an opened end (35),
. a hopper (32) placed inside the vessel and tapering to a discharge outlet in direction of the vessel opened end,
. a tearable membrane (33) closing the hopper and the vessel.
- said machine comprising :
. means for piercing the tearable membrane (33) of the container (3) and for cooperating with the hopper (32) of the container and
. a receiving assembly (2) configured and adapted to receive a container holding assembly (1) said container holding assembly comprising :
. a holding vessel (11) presenting a closed end (12) and an opened end (13), and a shape and a size such that the container vessel (31) is able to totally fit inside said holding vessel,
. at least one guiding and locking means (14) at its opened end,
. releasing means (151, 152) at its closed end for withdrawing the container (3) from the holding vessel (31),
and wherein the receiving assembly (2) comprises :
. at least one guiding means (21) to guide the container holding assembly (1),
. at least one locking means (22) to lock the container holding assembly (1),
. the means for piercing the tearable membrane of the container and for cooperating with the hopper of the container,
**characterized in that** said method comprising the steps of :
- introducing the container (3) inside the holding vessel (11) of the container holding assembly (1), the closed end (34) of the container vessel facing the closed end (12) of the container holding assembly,
- positioning the container holding assembly (1) in the machine so that the guiding and locking means (14) of said container holding assembly matches with the guiding means (21) and the locking means (22) of the receiving assembly.

4. Method according to Claim 3, wherein in the receiving assembly the means for piercing the tearable membrane of the container and for cooperating with the hopper of the container is a conduit.

5. Method according to Claim 4, wherein in the receiving assembly the guiding means (21) guides the container holding assembly (1) according to an axially aligned configuration respectively to the axis (C) of the conduit and the axis (C) of the of the hopper discharge outlet.

6. Method according to Claim 3 to 5 wherein in the receiving assembly the guiding means of said receiving assembly is a vertical slit (21).

7. Method according to Claim 3 to 6 wherein in the receiving assembly the locking means of said receiving assembly is a horizontal slit (22).

8. System for producing beverages comprising :
- a container (3) adapted for storing and unloading a powder material, said container (3) comprising :
. a vessel (31) presenting a closed end (34) and an opened end (35),
. a hopper (32) placed inside the vessel (31) and tapering to a discharge outlet in direction of the vessel opened end,
. a tearable membrane (33) closing the hopper and the vessel,
- a machine for preparing beverages from a powder material comprising a receiving assembly (2), said receiving assembly comprising means (23) for piercing the tearable membrane of the container and for cooperating with the hopper of the container,
- a container holding assembly (1) wherein the container holding assembly (1) comprises a holding vessel (11) presenting a closed end (12) and an opened end (13), said holding vessel presenting a shape and a size such that the container vessel is able to totally fit inside that holding vessel, and
. comprising at least one guiding and locking means (14) at its opened end for matching corresponding guiding means (21) and locking means (22) of the receiving assembly,
. comprising releasing means (151, 152) at its closed end for withdrawing the container from the holding vessel.

## Patentansprüche

1. Behälterhalteanordnung (1), die zum Verbinden eines zum Speichern und Entladen eines Pulvermaterials geeigneten Behälters (3) mit einer Maschine ausgeführt und geeignet ist,
- wobei der Behälter (3) Folgendes aufweist:
• ein Gefäß (31) mit einem geschlossenen Ende (34) und einem geöffneten Ende (35),
• einen in dem Gefäß (31) angeordneten Trichter (32), der zu einem Abgabeauslass in Richtung des geöffneten Endes des Gefäßes hin verjüngt ist,
• eine zerreißbare Membran (33), die den Trichter und das Gefäß verschließt,
- wobei die Maschine eine Aufnahmeanordnung (2) aufweist, die zum Aufnehmen der Behälterhalteanordnung (1) ausgeführt und geeignet ist, wobei die Aufnahmeanordnung Einrichtungen (23) zum Durchstoßen der zerreißbaren Membran des Behälters und zum Zusammenwirken mit dem Trichter des Behälters umfasst, wobei die Behälterhalteanordnung (1) ein Haltegefäß (11) mit einem geschlossenen Ende (12) und einem geöffneten Ende (13) aufweist, wobei das Haltegefäß:
- eine derartige Form und Größe aufweist, dass das Behältergefäß vollständig in dieses Haltegefäß passt,
- mindestens eine Führungs- und Verriegelungseinrichtung (14) an seinem geöffneten Ende umfasst, die mit entsprechenden Führungseinrichtungen (21) und Verriegelungseinrichtungen (22) der Aufnahmeanordnung zusammenpasst, wobei die Führungs- und Verriegelungseinrichtung aus einer Zunge (14) besteht,
- Freigabeeinrichtungen (151, 152) an seinem geschlossenen Ende umfasst, um den Behälter aus dem Haltegefäß herauszuziehen, wobei die Freigabeeinrichtungen ein Loch (152) aufweisen, in dem ein Kolben (151) gleiten kann.

2. Behälterhalteanordnung gemäß Anspruch 1, wobei das Haltegefäß (11) aus Kunststoff oder Metall besteht.

3. Verfahren zum Verbinden eines Behälters (3) zum Speichern und Entladen eines Pulvermaterials mit einer Maschine,
- wobei der Behälter (3) Folgendes umfasst:
• ein Gefäß (31) mit einem geschlossenen Ende (34) und einem geöffneten Ende (35),
• einen in dem Gefäß angeordneten Trichter (32), der zu einem Abgabeauslass in Richtung des geöffneten Endes des Gefäßes verjüngt ist,
• eine zerreißbare Membran (33), die den Trichter und das Gefäß verschließt,
- wobei die Maschine Folgendes umfasst:
• eine Einrichtung zum Durchbohren der zerreißbaren Membran (33) des Behälters (3) und zum Zusammenwirken mit dem Trichter (32) des Behälters sowie
• eine Aufnahmeanordnung (2), die zum Aufnehmen einer Behälterhalteanordnung (1) ausgeführt und geeignet ist,
wobei die Behälterhalteanordnung Folgendes umfasst:
• ein Haltegefäß (11), das ein geschlossenes Ende (12) und ein geöffnetes Ende (13) sowie eine derartige Form und Größe aufweist, dass das Behältergefäß (31) vollständig in das Haltegefäß hinein passt,
• mindestens eine Führungs- und Verriegelungseinrichtung (14) an ihrem geöffneten Ende,
• Freigabeeinrichtungen (151, 152) an ihrem geschlossenen Ende, um den Behälter (3) aus dem Haltegefäß (31) herauszuziehen,
und wobei die Aufnahmeanordnung (2) Folgendes umfasst:
• mindestens eine Führungseinrichtung (21) zum Führen der Behälterhalteanordnung (1),
• mindestens eine Verriegelungseinrichtung (22) zum Verriegeln der Behälterhalteanordnung (1),
• die Einrichtungen zum Durchbohren der zerreißbaren Membran des Behälters und zum Zusammenwirken mit dem Trichter des Behälters,
**dadurch gekennzeichnet, dass** das Verfahren folgende Schritte umfasst:
- Einführen des Behälters (3) in das Haltegefäß (11) der Behälterhalteanordnung (1), wobei das geschlossene Ende (34) des Behältergefäßes dem geschlossenen Ende (12) der Behälterhalteanordnung gegenüberliegt,
- Positionieren der Behälterhalteanordnung (1) in der Maschine derart, dass die Führungs- und Verriegelungseinrichtung (14) der Behälterhalteanordnung mit der Führungseinrichtung (21) und der Verriegelungseinrichtung (22) der Aufnahmeanordnung zusammenpasst.

4. Verfahren gemäß Anspruch 3, wobei die Einrichtung zum Durchbohren der zerreißbaren Membran des Behälters und zum Zusammenwirken mit dem Trichter des Behälters in der Aufnahmeanordnung aus einem Leitungsrohr besteht.

5. Verfahren gemäß Anspruch 4, wobei die Führungseinrichtung (21) in der Aufnahmeanordnung die Behälterhalteanordnung (1) gemäß einer axial ausgerichteten Ausführung zu der Achse (C) des Leitungsrohres bzw. zu der Achse (C) des Trichterabgabeauslasses führt.

6. Verfahren gemäß Anspruch 3 bis 5, wobei in der Aufnahmeanordnung die Führungseinrichtung der Aufnahmeanordnung aus einem senkrechten Schlitz (21) besteht.

7. Verfahren gemäß Anspruch 3 bis 6, wobei in der Aufnahmeanordnung die Verriegelungseinrichtung der Aufnahmeanordnung aus einem waagerechten Schlitz (22) besteht.

8. System zur Herstellung von Getränken mit:
- einem zum Aufbewahren und Entladen eines Pulvermaterials geeigneten Behälter (3), wobei der Behälter (3) Folgendes aufweist:
• ein Gefäß (31), das ein geschlossenes Ende (34) und ein geöffnetes Ende (35) aufweist,
• einen Trichter (32), der in dem Gefäß (31) angeordnet ist und zu einem Abgabeauslass in Richtung des geöffneten Endes des Gefäßes verjüngt ist,
• eine zerreißbare Membran (33), die den Trichter und das Gefäß verschließt,
- einer Maschine zur Zubereitung von Getränken aus einem Pulvermaterial mit einer Aufnahmeanordnung (2), wobei die Aufnahmeanordnung Einrichtungen (23) zum Durchbohren der zerreißbaren Membran des Behälters und zum Zusammenwirken mit dem Trichter des Behälters umfasst,
- einer Behälterhalteanordnung (1), wobei die Behälterhalteanordnung (1) ein Haltegefäß (11) mit einem geschlossenen Ende (12) und einem geöffneten Ende (13) umfasst, wobei das Haltegefäß eine derartige Form und Größe aufweist, dass das Behältergefäß vollständig in das Haltegefäß hinein passt, und
• mit mindestens einer Führungs- und Verriegelungseinrichtung (14) an ihrem geöffneten Ende, die mit einer entsprechenden Führungseinrichtung (21) und Verriegelungseinrichtung (22) der Aufnahmeanordnung zusammenpasst,
• mit Freigabeeinrichtungen (151, 152) an ihrem geschlossenen Ende, um den Behälter aus dem Haltegefäß herauszuziehen.

## Revendications

1. Ensemble de maintien de récipient (1) configuré et adapté pour relier un récipient (3) adapté pour stocker et décharger un matériau en poudre à une machine,
- ledit récipient (3) comprenant :
. un contenant (31) présentant une extrémité fermée (34) et une extrémité ouverte (35),
. une trémie (32) placée à l'intérieur du contenant (31) et se rétrécissant en une sortie d'évacuation en direction de l'extrémité ouverte du contenant,
. une membrane déchirable (33) fermant la trémie et le contenant,
- ladite machine comprenant un ensemble de réception (2) configuré et adapté pour recevoir l'ensemble de maintien de récipient (1), ledit ensemble de réception comprenant des moyens (23) destinés à percer la membrane déchirable du récipient et à coopérer avec la trémie du récipient,
dans laquelle l'ensemble de maintien de récipient (1) comprend un contenant de maintien (11) présentant une extrémité fermée (12) et une extrémité ouverte (13), ledit contenant de maintien :
- présentant une forme et une taille telles que le contenant de récipient est apte à être installé totalement à l'intérieur de ce contenant de maintien,
- comprenant au moins un moyen de guidage et de verrouillage (14) à son extrémité ouverte pour correspondre à des moyens de guidage (21) et des moyens de verrouillage (22) correspondant de l'ensemble de réception,
dans lequel ledit moyen de guidage et de verrouillage est une languette (14),
- comprenant des moyens de libération (151,152) à son extrémité fermée pour retirer le récipient du contenant de maintien, lesdits moyens de libération comprenant un trou (152) dans lequel un piston (151) est apte à coulisser.

2. Ensemble de maintien de récipient selon la revendication 1, dans lequel le contenant de maintien (11) est réalisé en matière plastique ou en métal.

3. Procédé pour relier un récipient (3) destiné à stocker et décharger un matériau en poudre à une machine,
- ledit récipient (3) comprenant :
. un contenant (31) présentant une extrémité fermée (34) et une extrémité ouverte (35),
. une trémie (32) placée à l'intérieur du contenant (31) et se rétrécissant en une sortie d'évacuation en direction de l'extrémité ouverte du contenant,
. une membrane déchirable (33) fermant la trémie et le contenant,
- ladite machine comprenant :
. des moyens pour percer la membrane déchirable (33) du récipient (3) et pour coopérer avec la trémie (32) du récipient, et
. un ensemble de réception (2) configuré et adapté pour recevoir un ensemble de maintien de récipient (1), ledit ensemble de maintien de récipient comprenant :
. un contenant de maintien (11) présentant une extrémité fermée (12) et une extrémité ouverte (13), et une forme et une taille telles que le contenant de récipient (31) est apte à être inséré totalement à l'intérieur dudit contenant de maintien,
. au moins un moyen de guidage et de verrouillage (14) à son extrémité ouverte,
. des moyens de libération (151,152) à son extrémité fermée pour retirer le récipient (3) du contenant de maintien (31),
et dans lequel l'ensemble de réception (2) comprend :
. au moins un moyen de guidage (21) pour guider l'ensemble de maintien de récipient (1),
. au moins un moyen de verrouillage (22) pour verrouiller l'ensemble de maintien de récipient (1),
. les moyens pour percer la membrane déchirable du récipient et pour coopérer avec la trémie du récipient,
**caractérisé en ce que** le procédé comprend les étapes consistant à :
- introduire le récipient (3) à l'intérieur du contenant de maintien (11) de l'ensemble de maintien de récipient (1), l'extrémité fermée (34) du contenant du récipient faisant face à l'extrémité fermée (12) de l'ensemble de maintien de récipient,
- positionner l'ensemble de maintien de récipient (1) dans la machine de sorte que le moyen de guidage et de verrouillage (14) dudit ensemble de maintien de récipient correspond au moyen de guidage (21) et au moyen de verrouillage (22) de l'ensemble de réception.

4. Procédé selon la revendication 3, dans lequel dans l'ensemble de réception le moyen pour percer la membrane déchirable du récipient et pour coopérer avec la trémie du récipient est un conduit.

5. Procédé selon la revendication 4, dans lequel dans l'ensemble de réception le moyen de guidage (21) guide l'ensemble de maintien de récipient (1) selon une configuration, alignée axialement, respectivement par rapport à l'axe (C) du conduit et l'axe (C) de la sortie de décharge de trémie.

6. Procédé selon les revendications 3 à 5, dans lequel dans l'ensemble de réception le moyen de guidage dudit ensemble de réception est une fente verticale (21).

7. Procédé selon les revendications 3 à 6, dans lequel dans l'ensemble de réception le moyen de verrouillage dudit ensemble de réception est une fente horizontale (22).

8. Système destiné à produire des boissons comprenant :
- un récipient (3) adapté pour stocker et décharger un matériau en poudre, ledit récipient (3) comprenant :
. un contenant (31) présentant une extrémité fermée (34) et une extrémité ouverte (35),
. une trémie (32) placée à l'intérieur du contenant (31) et se rétrécissant en une sortie d'évacuation en direction de l'extrémité ouverte du contenant,
. une membrane déchirable (33) fermant la trémie et le contenant,
- une machine destinée à préparer des boissons à partir d'un matériau en poudre comprenant un ensemble de réception (2), ledit ensemble de réception comprenant des moyens (23) pour percer la membrane déchirable du récipient et pour coopérer avec la trémie du récipient,
- un ensemble de maintien de récipient (1), dans lequel l'ensemble de maintien de récipient (1) comprend un contenant de maintien (11) présentant une extrémité fermée (12) et une extrémité ouverte (13), ledit contenant de maintien présentant une forme et une taille telles que le contenant de récipient est apte à être inséré totalement à l'intérieur du contenant de maintien, et
. comprenant au moins un moyen de guidage et de verrouillage (14) à son extrémité ouverte pour correspondre à des moyens de guidage (21) et des moyens de verrouillage (22) correspondant de l'ensemble de réception,
. comprenant des moyens de libération (151,152) à son extrémité fermée pour retirer le récipient du contenant de maintien.
